# EUROPEAN PATENT APPLICATION

(11) **EP 4 722 044 A1**
(43) Date of publication of application: **08.04.2026**
(21) Application number: 24927667.6
(22) Date of filing: 05.12.2024
(51) Int. Cl.: B60Q 1/30, B60Q 1/04

(54) **STRUCTURAL ARRANGEMENT APPLIED TO A VEHICLE LIGHT PROVIDED WITH MODULAR LIGHTING DEVICES**

(30) Priority: 17.04.2024 BR 202024007493 U
(71) Applicant: Balbinot, Mauricio, 95076-100 Caxias do Sul (BR)
(72) Inventor: Balbinot, Mauricio, 95076-100 Caxias do Sul (BR)
(74) Representative: Pereira Garcia, João Luís
(86) International application number: PCT/BR2024/050566
(87) International publication number: WO 2025/217699

(57) **Abstract**

In general, the present structural arrangement belongs to the automotive technology sector, and refers more specifically to a vehicle light (1) equipped with modular lighting devices known as daytime running lights, this vehicle light being equipped with three functions: directional and position specially developed DRL among all its features to power through a single switching power supply (10A) a plurality of linear drivers (10B) responsible for each vehicle light (1) so that the total power consumed does not change significantly depending on the number of vehicle lights used. The modular vehicle light (1) herein disclosed is basically comprised of a control and lighting module (not shown), and can be assembled with a grouping of three, four or five vehicle lights (1), preferably with dimensions of 15x72x27mm, in accordance with standard ECER148 §5.4.6, having a minimum apparent surface area of 25cm².

## Description

### APPLICATION FIELD OF THE UTILITY MODEL

In general, the present structural arrangement belongs to the automotive technology sector, and refers more specifically to a vehicle light (1) equipped with modular lighting devices, this vehicle light being equipped with three functions: directional and position specially developed DRL among all its features to power through a single switching power supply (10A) a plurality of linear drivers (10B) responsible for each vehicle light (1) so that the total power consumed does not change significantly depending on the number of vehicle lights used.

### BACKGROUND OF THE UTILITY MODEL

Currently, vehicle lights equipped with DRLs available on the market are generally built with a lamp or LED light source, accompanied by reflectors and external lenses.

Furthermore, the DRLs of the vehicle lights known until then combine the daytime running, position and directional functions and use LEDs arranged in white and yellow pairs, with the white light LED intended for the DRL and Position function and the yellow light LED for the directional function, with an internal lens input in radial collimators centered on the LED pair itself, with the output of the internal lens having intermediate optics and the input of the external lens having a thick and convex texture with the output of a diffuse PMMA lens causing the dispersion of the light and final projection.

As a main drawback, such vehicle lights have a linear electrical system that is less efficient than a switching power supply, which in addition to representing higher production costs, generates a total power varying according to each module added to the system, causing greater generation of rereads related to electromagnetic interference, and consequently lower efficiency.

From the current state of the art, document BR202018075665-1 "LED VEHICLE LIGHT DISPOSITION FOR VEHICLES" stands out, describing an LED vehicle light, both for rear use in reverse, directional, fog, position, and brake functions, and for front use in daytime running light (DRL) and directional functions. The vehicle light consists of a base, an electronic board, an optical assembly integrated with LEDs mounted on the base of the collimators, and an external lens that hermetically seals the housing against the base. The optical assembly is installed on a mounting bracket. The collimators are preferably made of translucent and crystalline polymeric material, optionally acrylic. In a preferred mounting method for the optical assembly, the LEDs are fixed to the PCI and surrounded by ducts that are integral with the collimators.

It should be noted that the previously described document shows several drawbacks previously highlighted in the current state of the art such as, for example, LEDs arranged in white and yellow pairs, with an internal lens input in radial collimators centered on the LED pair itself, with the internal lens output having intermediate optics and the external lens input having a thick and convex texture with the diffuse PMMA lens output causing light dispersion and final projection, in addition to having a switching power supply for each lighting module, which in addition to leading to higher production costs, generates a total power varying according to each module added to the system, causing greater energy consumption, and consequently lower efficiency.

Therefore, based on all the drawbacks existing in the systems and equipment currently used, described above in the state of the art, it is clear that there is a gap in the creation of a vehicle light equipped with modular lighting devices known as daytime running lights, this vehicle light being equipped with three functions: directional and position specially developed DRL, among all its characteristics, to power through a single switching power supply a plurality of linear drivers responsible for each module so that the total power consumed does not change significantly according to the number of vehicle lights used.

The vehicle light was also thermally dimensioned so that each module was able to operate thermally safely through a thermal layout and a combination of efficient LEDs that, combined with a metal core board and a polymeric heatsink, is able to dissipate the heat generated efficiently.

### SUMMARY AND OBJECTIVES OF THE UTILITY MODEL

The vehicle light equipped with modular lighting devices herein provided has a rectangular lighting module with preferred dimensions of 15x72x27mm, these dimensions being in accordance with standard ECER148 §5.4.6, with an apparent surface of at least 25cm². The lighting device is comprised of "n" vehicle lights, preferably between 3 and 5 vehicle lights.

Additionally, it features a polymer vehicle body appropriately sized for thermal optimization. Its PCI is made of a metal core, which ensures greater thermal homogeneity and improved heat dissipation across the board's surface. It also features a thick, translucent polymer internal lens and a polymer frame that secures and finishes the internal parts with a conventional crystal polymer external lens.

Its LED set is aligned and interleaved between white and yellow, featuring an internal lens input with an extruded collimator and an internal lens output with projection optics. Its external lens input features a fine texture, and the external lens output is polished and conventional type.

In particular, said vehicle light is capable of powering through a single switching power supply a plurality of linear drivers responsible for each module so that the total power consumed does not change significantly depending on the number of modules used in the vehicle light.

Thus, with the objective of solving the flaws in the current state of the art highlighted above, the present invention patent aims to propose a new structural arrangement applied to a vehicle light equipped with modular lighting devices known as daytime running lights, this vehicle light being equipped with three functions: directional and position specially developed DRL, among all its characteristics, to power through a single switching power supply a plurality of linear drivers responsible for each module so that the total power consumed does not change significantly according to the number of vehicle lights used.

### BRIEF DESCRIPTION OF THE DRAWINGS

In order for the present arrangement to be fully understood and put into practice by any person skilled in the art in this technological sector, it will be described clearly, concisely, and sufficiently based on the attached drawings, which illustrate and support it, listed below:

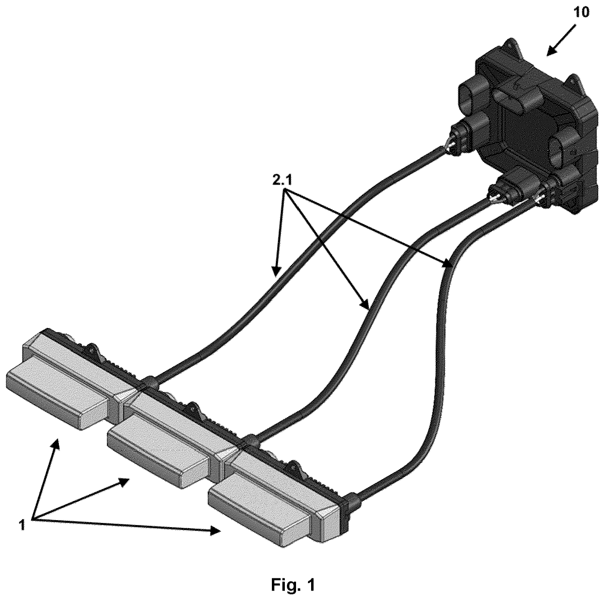

**Figure 1** shows the set of three vehicle lights connected to the module.

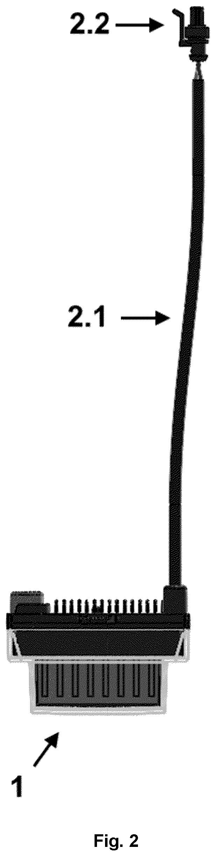

**Figure 2** shows the vehicle light with wire harness.

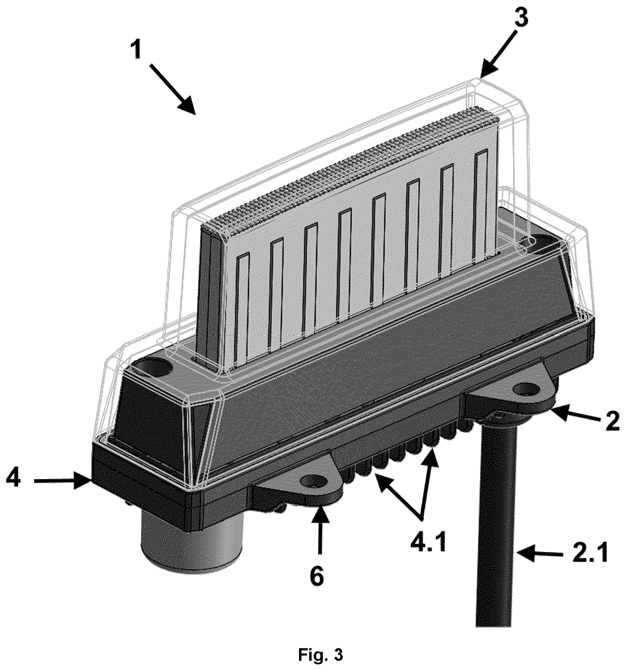

**Figure 3** shows the perspective view of the vehicle light.

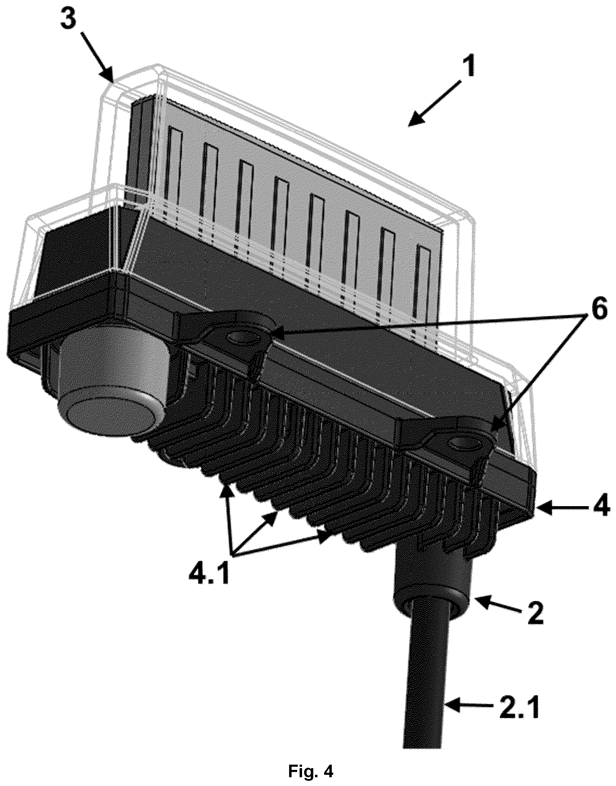

**Figure 4** shows the bottom perspective view of the vehicle light.

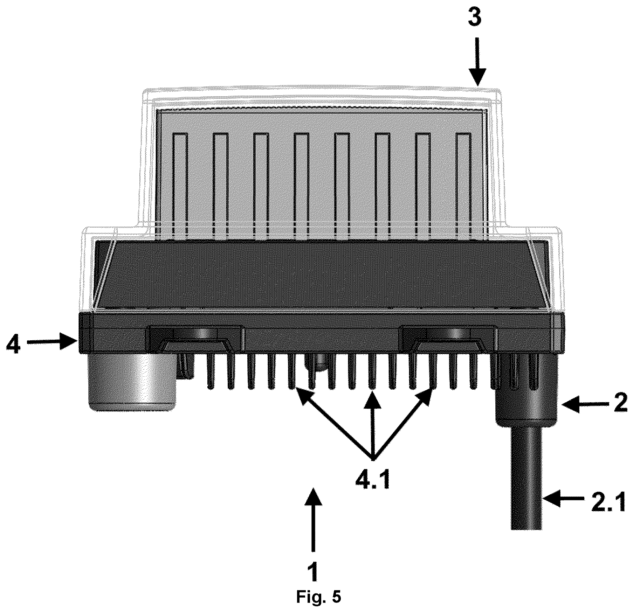

**Figure 5** shows the front view of the vehicle light.

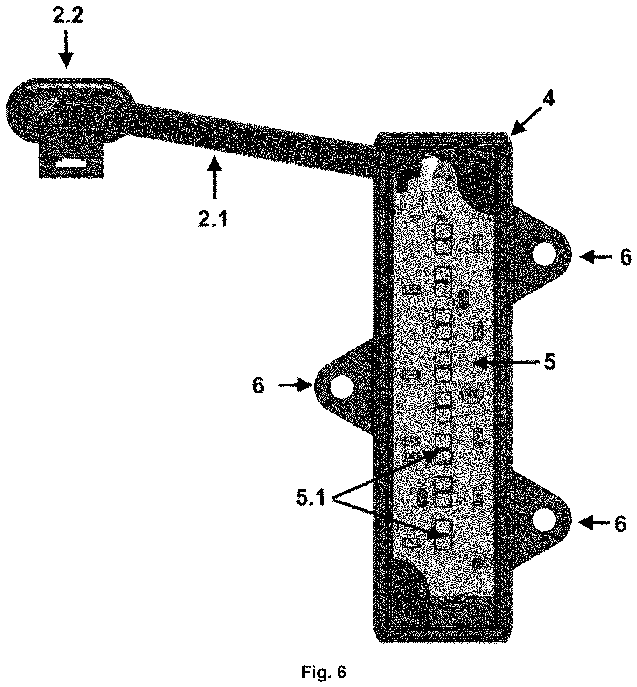

**Figure 6** shows the top view of the vehicle light without the lens, detailing the positioning of the LED board.

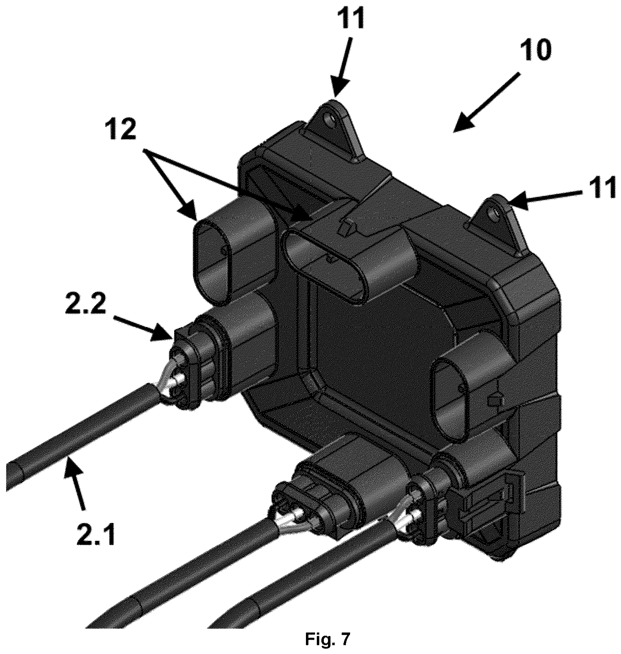

**Figure 7** shows the perspective view of the module with the wiring connections of the vehicle lights.

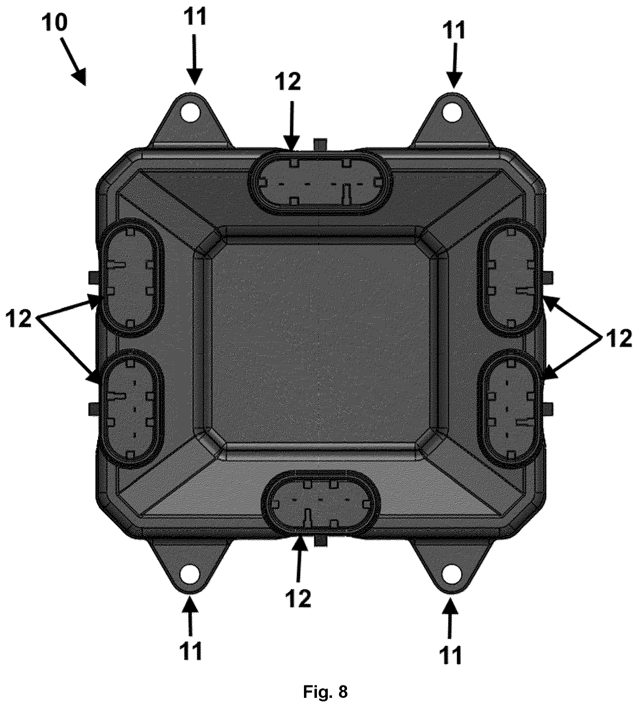

**Figure 8** shows the front view of the module, detailing its construction.
**Figure 9** shows an exploded view of a vehicle light with the module detailing the internal components of the vehicle light.
**Figure 10** shows the set of four vehicle lights connected to the module.
**Figure 11** shows the set of five vehicle lights connected to the module.
**Figure 12** shows the electronic diagram of the control and lighting module.

The attached Figures show the preferred way of execution of the product, so that its presentation method is not restrictive, and there may be constructive modifications that maintain the same claimed points.

### DETAILED DESCRIPTION OF THE UTILITY MODEL

The modular vehicle light (1) herein disclosed is basically comprised of a control and lighting module (10), and can be assembled with a grouping of three, four or five vehicle lights (1), preferably with dimensions of 15x72x27mm, in accordance with standard ECER148 §5.4.6, having a minimum apparent surface area of 25cm².

Its vehicle body (4) is made of polymer for thermal optimization purposes, thermally dimensioned for greater durability, and is equipped with an output (2) for the wire harness (2.1) equipped with a connector (2.2). Its PCI (5) is made of aluminum, which ensures a more homogeneous thermal distribution across the entire surface of the board, maximizing heat conduction to the vehicle body.

In the lower portion of the vehicle body (4) fins (4.1) are arranged, appropriately sized and which helps to dissipate heat from the internal components.

Its internal lens (3A) and frame (3B) are composed, respectively, of high typically thick crystal PMMA. The frame (3B) is fixed to the vehicle body (4) using screws (3.1B) that are fixed to projections at the ends of the vehicle body (4).

Its outer lens (3) is made of a translucent polymer that is resistant to UV aging and ensures the vehicle light's watertightness. Furthermore, it guarantees lower manufacturing costs without compromising the product durability and light diffusion.

Note that its optical design features aligned and interleaved LEDs (5.1), preferably in white and yellow, with the internal lens input (3A) made with an extruded collimator and the internal lens output (3A) with projection optics.

The PCI (5) is equipped with 8 pairs of LEDs (5.1), 8 white LEDs and 8 yellow LEDs, however, other combinations may be valid.

The external lens inlet (3) has a fine texture that adequately characterizes the illuminated surface, while the external lens outlet (3) is conventionally polished.

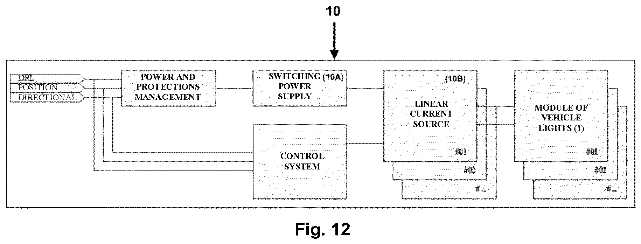

Note that the electronic project has a single switching power supply (10A) feeding the linear drivers (10B) for each vehicle light (1), so that the total power consumed is similar, whether for three, four or five vehicle light modules (1), as described in Figure 12.

The module (10) is equipped with tabs (11) for fixing to the vehicle and connections (12). In addition, the module is equipped with a board (13) positioned on the rear portion of the module which is resin coated.

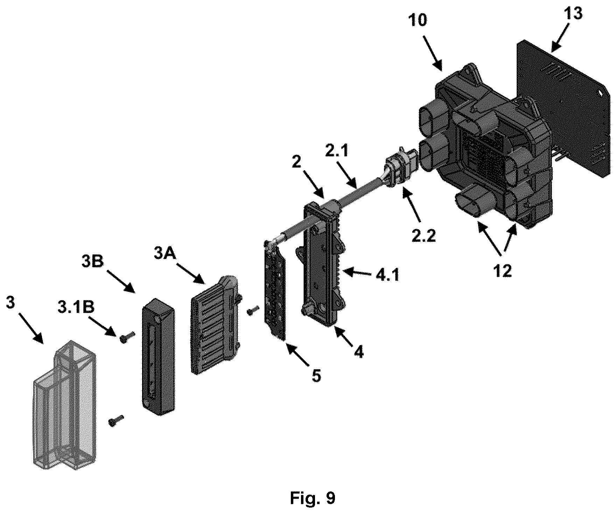

Figure 9 shows an exploded view of a vehicle light (1) to the module (10), detailing the internal components of the vehicle light (1).

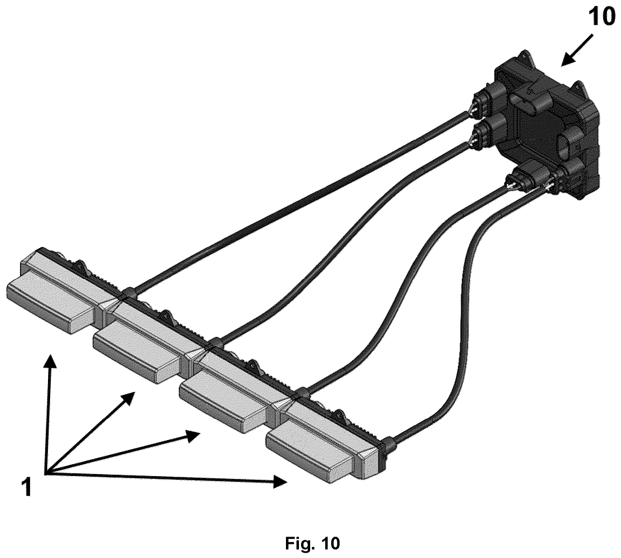

Figure 10 shows a module with a grouping of four vehicle lights.

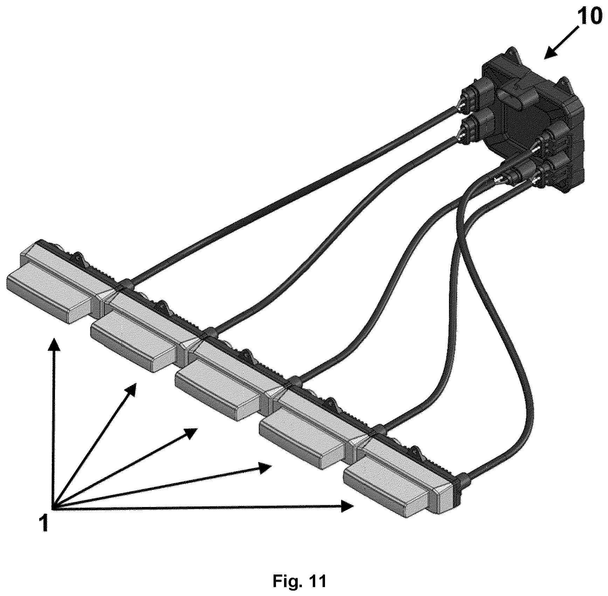

Figure 11 shows a module with a grouping of five vehicle lights.

## Claims

1. A STRUCTURAL ARRANGEMENT APPLIED IN VEHICLE LIGHT EQUIPPED WITH MODULAR LIGHTING DEVICES WHICH COMPRISES A CONTROL AND LIGHTING MODULE (NOT SHOWN) **characterized in that** it has vehicle lights (1) having a thermal construction equipped with a set of LEDs (5.1) combined with a PCI board (5) and a polymeric heatsink (4.1) with the vehicle body (4), in addition to having a single switching power supply (10A) that powers the linear drivers (10B) for each vehicle light (1), so that the total power consumed is fixed for all vehicle lights (1).

2. THE STRUCTURAL ARRANGEMENT APPLIED IN VEHICLE LIGHT EQUIPPED WITH MODULAR LIGHTING DEVICES, according to claim 1, **characterized in that** it has three, four or five lighting modules (1), vehicle body (4) consisted of polymer and equipped with an output for the wire harness (2), PCI board (5) made with an aluminum substrate, external lens (3) in crystal polymer, LEDs (5.1) aligned and interspersed, with the input of the external lens (3) being of the fine texture finish type and the output of the external lens (3) being of the conventional polished type.

3. THE STRUCTURAL ARRANGEMENT APPLIED IN VEHICLE LIGHT EQUIPPED WITH MODULAR LIGHTING DEVICES, according to claims 1 and 2, **characterized in that** the PCI board (5) allows its manufacture in any other type of metal, with aluminum being preferably used.

4. THE STRUCTURAL ARRANGEMENT APPLIED IN VEHICLE LIGHT EQUIPPED WITH MODULAR LIGHTING DEVICES, according to claim 1, **characterized in that** each module (1) has a set of LEDs (5.1) mounted on a board (5) with an aluminum substrate which is mounted on a polymeric heatsink (4).

5. THE STRUCTURAL ARRANGEMENT APPLIED IN VEHICLE LIGHT EQUIPPED WITH MODULAR LIGHTING DEVICES, according to claim 1, **characterized in that** the wire harness (2.1), with 3-way cable, has a connector (2.2) sealed at the end connecting to the module (10).

6. THE STRUCTURAL ARRANGEMENT APPLIED IN VEHICLE LIGHT EQUIPPED WITH MODULAR LIGHTING DEVICES, according to claim 1, **characterized in that** the wire harness (2.1), with 3-way cable, has a sealed connector (2.2) at the end connecting to the LED module (1).

7. THE STRUCTURAL ARRANGEMENT APPLIED IN VEHICLE LIGHT EQUIPPED WITH MODULAR LIGHTING DEVICES, according to claim 1, **characterized in that** the wire harness (2.1), with 3-way cable, has a connector (2.2) sealed at both ends, which connects to the LED module (1) and the control module (10).

8. THE STRUCTURAL ARRANGEMENT APPLIED IN VEHICLE LIGHT EQUIPPED WITH MODULAR LIGHTING DEVICES, according to claim 1, **characterized in that** the board (5) has a plurality of 8 pairs of LEDs, being 8 white LEDs and 8 yellow LEDs.

9. THE STRUCTURAL ARRANGEMENT APPLIED IN VEHICLE LIGHT EQUIPPED WITH MODULAR LIGHTING DEVICES, according to claim 1, **characterized in that** the internal lens (3) is translucent and polymeric with an extruded shaped input collimator.
